Europäisches Patentamt

European Patent Office

Office européen des brevets

(19)

(11) Veröffentlichungsnummer : **0 108 892**
**B1**

(12) EUROPÄISCHE PATENTSCHRIFT

(45) Veröffentlichungstag der Patentschrift :
20.08.86

(21) Anmeldenummer : 83109391.9

(22) Anmeldetag : 21.09.83

(51) Int. Cl.⁴ : **C 04 B 35/54, B 22 F  7/00,**
**F 16 C  33/16, F 16 C  33/04**

(54) Konstruktionswerkstoffe mit guten Gleiteigenschaften und Verfahren zu ihrer Herstellung.

(30) Priorität : 07.10.82 DE 3237163

(43) Veröffentlichungstag der Anmeldung :
23.05.84 Patentblatt 84/21

(45) Bekanntmachung des Hinweises auf die Patenterteilung : 20.08.86 Patentblatt 86/34

(84) Benannte Vertragsstaaten :
BE CH DE FR GB LI SE

(56) Entgegenhaltungen :
FR-A- 2 295 913
GB-A-   645 126
GB-A-   690 942
GB-A- 1 042 021
GB-A- 1 316 096
MACHINERY, Band 105, Nr. 2709, Oktober 14, 1964,
Seiten 927/29. P.J. MITCHELL: "Carbon rings and
packing for non-lubricated gas compressors"

(73) Patentinhaber : Nukem GmbH
Rodenbacher Chaussee 6 Postfach 11 00 80
D-6450 Hanau 11 (DE)

(72) Erfinder : Hrovat, Milan, Dr. Dipl.-Ing.
Meisenweg 7
D-6458 Rodenbach 2 (DE)
Erfinder : Huschka, Hans Dr. Dipl.-Chem.
Grünaustrasse 7
D-6450 Hanau 9 (DE)
Erfinder : Rachor, Lothar
Seligenstädterstrasse 79
D-6450 Hanau 8 (DE)
Erfinder : Schmidt-Hansberg, Thomas, Dr. Dipl.-
Chem.
Fuchshohl 67
D-6000 Frankfurt 50 (DE)

(74) Vertreter : Nowak, Gerhard
DEGUSSA AG Fachbereich Patente Postfach 1345
D-6450 Hanau 1 (DE)

# 0 108 892

**Beschreibung**

Die Erfindung betrifft Konstruktionswerkstoffe mit guten Gleitengenschaften zur Anwendung im Maschinenbau sowie ein Verfahren zu ihrer Herstellung.

Bei der Auslegung und Konstruktion von Gleitlagern im Maschinenbau ist die Auswahl des Lagermaterials von ausschlaggebender Bedeutung. Werkstoffe, die für Gleitlager in Betracht kommen, müssen neben guten Gleit- und Notlaufeigenschaften ein gutes Bearbeitungs-, Einbettungs- und Einlaufverhalten zeigen. Sie müssen hierzu eine hohe Wärmeleitfähigkeit und mechanische Festigkeit besitzen. In vielen Anwendungsfällen unter extremen klimatischen und anderen Umweltbedingungen ist zusätzlich eine überragende Korrosionsbeständigkeit des Gleitlagermaterials erforderlich.

Es sind eine Reihe von Gleitlagermaterialien bekannt, die für derart extreme Bedingungen, wie z. B. bei Aggregaten im chemischen Bereich, in der Schiffahrt und in küstennahen Regionen und in feuchtwarmen geographischen Regionen eingesetzt werden. Dazu gehören metallische Sinterwerkstoffe, teilweise mit einem geringfügigen Graphitanteil durchsetzt, mit Oel Graphit oder $MoS_2$ geschmierte metallische Lager, metallische Lagermaterialien mit besonders gehärteten Oberflächen oder mit Karbiden bzw. Phosphat versehenen Überzügen. Lagermaterialien aus Kolloidgraphit, in dem Metall eingelagert ist, wurden ebenfalls erprobt, ebenso aus Metall-Kunststoffkombinationen. Auch Werkstoffe aus reinem Kunststoff werden in vielen Anwendungsfällen als Gleitlagerwerkstoff eingesetzt ; ferner Werkstoffe aus gepreßter Kohle bzw. Graphit (Elektroindustrie, hier vor allem als Elektroden mit entsprechenden Gleiteigenschaften).

In den DE-PSen 2 504 833, 1 966 881 und in der DE-OS 2 353 928 wird über derartige Lager berichtet.

Alle derartigen Gleitmaterialien haben zwar gute Gleit- und teilweise auch ausreichende Notlaufeigenschaften, besitzen jedoch nachteilig im Einsatz unter korrosiven und extremen klimatischen Bedingungen nur eine begrenzte Lebensdauer und müssen daher ständig gewartet und Häufig ersetzt werden.

Der vorliegenden Erfindung lag daher die Aufgabe zugrunde, Konstruktionswerkstoffe mit guten Gleiteigenschaften zur Anwendung im Maschinenbau sowie ein Verfahren zu ihrer Herstellung zu schaffen, wobei die beschriebenen Nachteile vermieden und die Konstruktionswerkstoffe gute Bearbeitungs-, Gleit- und Korrosionseigenschaften, insbesondere gegenüber Seewasser aufweisen, abriebfest, selbstschmierend, wartungsarm und billig herstellbar und auch für Schleifkontakte in elektrischen Aggregaten einsetzbar sind.

Die Aufgabe wurde erfindungsgemäß dadurch gelöst, daß die Konstruktionswerkstoffe 20-80 Gew.-% Metallsulfid in Form von Eisensulfid, Kobaltsulfid, Nickelsulfid, Kupfersulfid, Molybdänsulfid, Zinnsulfid oder Antimonsulfid, Rest Kohlenstoff, enthalten.

Es hat sich überraschend gezeigt, daß die erfindungsgemäßen Konstruktionswerkstoffe aus den genannten Metallsulfiden, eingebettet in eine Kohlenstoffmatrix, eine hohe Festigkeit, Temperaturstabilität und sehr gute Gleiteigenschaften, verbunden mit einer hervorragenden Stabilität gegenüber korrosiven Medien, wie z. B. Seewasser, aufweisen und auch ein güngtiges Abriebverhalten zeigen.

In besonders vorteilhaften Ausgestaltungen liegt der Kohlenstoff als Graphit, vorteilhafterweise als Naturgraphit vor. Weiterhin ist es besonders günstig, wenn die Metallsulfide überwiegend in Form von $FeS_2$, $CoS$, $Ni_3S_2$, $Cu_2S$, $MoS_2$, $SnS_2$ oder $Sb_2S_3$ vorliegen.

Zur Herstellung von Formkörpern aus den erfindungsgemäßen Konstruktionswerkstoffen wird vorteilhafterweise ein Verfahren verwendet, bei dem das Kohlenstoff-/Schwefel-/Metallpulver-Gemisch im Temperaturbereich zwischen 80 °C und 200 °C mit einem Druck von 20-100 $MN/m^2$ gepreßt und bei Temperaturen bis 700 °C unter anhaltendem Druck in der Presse nachgetempert wird.

Dabei wird Kohlenstoff, beispielsweise Petrolkokspulver, mit stöchiometrischen Metall-/Schwefel-Pulvergemischen als Bindemittel verpreßt. Die sulfidbildenden Komponenten können aus Eisen, Kobalt, Nickel, Kupfer, Molybdän, Zinn oder Antimon bestehen. Die während der weiteren Behandlung gebildeten Metallsulfide liegen zu mindestens 75 % in Form der genau definierten Verbindungen $FeS_2$, $CoS$, $Ni_3S_2$, $Cu_2S$, $MoS_2$, $SnS_2$ und $Sb_2S_3$ vor. Als Kohlenstoff-Komponente haben sich Graphitpulver besonders bewährt, da diese den erfindungsgemäßen Materialien vorzügliche Gleiteigenschaften verleihen, insbesondere Naturgraphit mit seinem hohen Graphitierungsgrad. Während also die Kohlenstoff- bzw. Graphitkomponente das Gleitverhalten verbessert, erhöht die Metallsulfidkomponente die Abriebfestigkeit der Materialien, also ihre innere mechanische Stabilität. Weiterhin wirkt sich die Metallsulfidkomponente in den erfindungsgemäßen metallfreien Materialien entscheidend für das hervorragende Verhalten gegenüber Seewasser und fallweise gegenüber anderen korrosiven Medien aus.

Auch Materialzusammensetzungen mit hohem Metallsulfidanteil bis zu 80 Gew.-% sind als Gleitlagermaterial und auch für Schleifkontakte in elektrischen Aggregaten gut geeignet, da der Volumenanteil des Kohlenstoffrestes in der Matrix noch mindestens 33 % beträgt.

Vorteilhafterweise beträgt jedoch der Metallsulfidanteil im erfindungsgemäßen metallsulfidgebundenen Formkörper 30-55 Gew.-%, je nach verwendetem Ausgangsmetallpulver.

Die Herstellung der Formkörper beginnt mit dem Mischen der pulverförmigen Komponenten Graphit, Schwefel und Metall, z. B. in einer Schwingkugelmühle. Metall- und Schwefelpulver liegen dabei im stöchiometrischen Verhältnis vor. Nach dem Einfüllen des so hergestellten homogenen Preßpulvergemisches in eine beheizbare Preßmatrize wird diese auf eine Temperatur zwischen 80 °C und 200 °C

2

aufgeheizt. In der aufgeheizten Preßmatrize wird das Preßpulver bei einem Druck zwischen 20 und 100 MN/m² zunächst auf eine Dichte von 88-93 % der theoretischen Gemischdichte gepreßt. Unter gleichbleibendem anhaltendem Druck wird der entstandene Formkörper anschließend bei Temperaturen bis 700 °C in der Presse nachgetempert. Dabei reagieren Metallpulver-und Schwefelpulver-Komponenten zu entsprechenden Metallsulfiden, und die Dichte des Formkörpers steigt gleichzeitig auf über 97 % des theoretischen Wertes an. Nachdem der Formkörper auf 300-400 °C abgekühlt ist, wird er aus der Matrize ausgestoßen und weiterhin bearbeitet. Das Metallsulfid ist im Formkörper gleichmäßig verteilt. Das Herstellungsverfahren ist unproblematisch, schnell, sauber und außerordentlich wirtschaftlich. Außerdem erfordert es bzw. der erfindungsgemäße Formkörper nur den Einsatz geringer Mengen Wertstoffe.

Der je nach Bedarf entsprechend vorgeformte, getemperte Preßkörper läßt sich durch Drehen, Fräsen, Bohren etc. sehr gut bearbeiten. Die bearbeiteten Oberflächen haben eine hohe Abriebfestigkeit und ein ausgezeichnetes Gleitverhalten. Auch die weiteren mechanischen und thermischen Eigenschaften sowie die Korrosionseigenschaften sind hervorragend, wie aus den folgenden Beispielen ersichtlich ist.

## Beispiel 1

Als Ausgangspulver wurde eine homogene Mischung aus 43,7 Gew.-% Feinpuder-Naturgraphit, 15 Gew.-% feingemahlenem Schwefel und 41,3 Gew.-% Nickelmetallpulver durch Trockenmischen in einer Schwingkugelmühle hergestellt. Diese Mischung wurde in eine von außen elektrisch beheizbare Matrize gefüllt und dort auf 130 °C erwärmt. Bei dieser Temperatur wurde das Preßpulver mit einem Druck von 50 MN/m² auf ca. 90 % des theoretischen Wertes verdichtet und anschließend unter anhaltendem Druck auf 450 °C erwärmt. Nach einer 10-minütigen Haltezeit wurde der Formkörper auf 400 °C abgekühlt und bei dieser Temperatur ausgestoßen.

Der fertiggepreßte Formkörper hatte folgende Eigenschaften, wobei die Korrosionsbedingungen teilweise so extrem gewählt werden, daß z. B. Seewasserbedingungen weit übertroffen wurden :

| | |
|---|---|
| Schmelzpunkt des Nickelsulfids : | ~ 790 °C |
| Dichte : | 3,40 g/cm³ |
| % der theoretischen Dichte : | 98,3 % |
| Wärmeleitfähigkeit : | 0,8 W/cm K |
| linearer thermischer Ausdehnungskoeffizient : | 9,2 μm/m K |
| Druckfestigkeit : | 107 MN/m² |
| spez. elektrischer Widerstand : | 0,3 mΩ cm |
| Korrosionsrate in gesättigter, quinärer Carnallit-Lauge bei 150 °C : | nur $1 \cdot 10^{-5}$ g/cm² · d |
| Korrosionsrate in 0,1 m HCl-saurer gesättigter, quinärer Carnallit-Lauge bei Raumtemperatur : | nur $3 \cdot 10^{-5}$ g/cm² · d |
| Korrosionsrate in Argon/Wasserdampf-Atmosphäre (2,4 Vol.-% $H_2O$) bei 300 °C : | nur $8 \cdot 10^{-4}$ g/cm² · d |
| Korrosionsrate in Luft bei 300 °C : | nur $2 \cdot 10^{-5}$ g/cm² · d |

Die aus dem Material hergestellten Formstücke besitzen zusätzlich ausgezeichnete Gleiteigenschaften und hohe Abriebfestigkeiten und ließen sich problemlos auf bekannte Weise leicht mechanisch zu Lagerteilen und zu Schleifkontaktkörpern für elektrische Anwendungsbereiche bearbeiten.

## Beispiel 2

Als Ausgangspulver wurde eine homogene Mischung aus 54,7 Gew.-% feinpuder-Naturgraphit, 16 Gew.-% feingemahlenem Schwefel und 29,3 Gew.-% Nickelmetallpulver durch Trockenmischen in einer Schwingkugelmühle hergestellt. Diese Mischung wurde in eine von außen elektrisch beheizbare Matrize gefüllt und dort auf 110 °C erwärmt. Bei dieser Temperatur wurde das Preßpulver mit einem Druck von 40 MN/m² auf ca. 85 % des theoretischen Wertes verdichtet und anschließend unter anhaltendem Druck auf 400 °C erwärmt. Nach einer 10-minütigen Haltezeit wurde der Formkörper auf 300 °C abgekühlt und bei dieser Temperatur ausgestoßen.

Der fertiggepreßte Formkörper hatte folgende Eigenschaften :

| | |
|---|---|
| Schmelzpunkt des Nickelsulfids : | ~ 790 °C |
| Dichte : | 3,0 g/cm³ |
| % der theoretischen Dichte : | 97 % |
| Wärmeleitfähigkeit : | 1,2 W/cm K |
| Druckfestigkeit : | 88 MN/m² |
| Korrosionsrate in gesättigter, quinärer Carnallit-Lauge bei 150 °C : | nur $2 \cdot 10^{-5}$ g/cm² · d |
| Korrosionsrate in 0,1 m HCl-saurer gesättigter, quinärer Carnallit-Lauge bei Raum-temperatur : | nur $3 \cdot 10^{-5}$ g/cm² · d |

Bearbeitbarkeit und zusätzliche Eigenschaften entsprachen den Formstücken aus Beispiel 2.

3

**0 108 892**

Beispiel 3

Als Ausgangspulver wurde eine homogene Mischung aus 47 Gew.-% Feinpuder-Naturgraphit, 15 Gew.-% feingemahlenem Schwefel und 38 Gew.-% Antimonmetallpulver durch Trockenmischen in einer Schwingkugelmühle hergestellt. Diese Mischung wurde in eine von außen elektrisch beheizbare Matrize gefüllt und dort auf 100 °C erwärmt. Bei dieser Temperatur wurde das Preßpulver mit einem Druck von 100 MN/m² auf ca. 92 % des theoretischen Wertes verdichtet und anschließend unter anhaltendem Druck auf 500 °C erwärmt. Nach einer 30-minütigen Haltezeit wurde der Formkörper auf 400 °C abgekühlt und bei dieser Temperatur ausgestoßen.

Der fertiggepreßte Formkörper hatte folgende Eigenschaften :

| | |
|---|---|
| Schmelzpunkt des Antimonsulfids : | 550 °C |
| Dichte : | 3,04 g/cm³ |
| % der theoretischen Dichte : | 97 % |
| Korrosionsrate in Argon/Wasserdampf-Atmosphäre (2,4 Vol.-% $H_2O$) bei 300 °C : | $8 \cdot 10^{-4}$ g/cm² · d |
| Korrosionsrate in Luft bei 300 °C : | $2 \cdot 10^{-5}$ g/cm² · d |

Die aus dem Material hergestellten Formstücke besitzen zusätzlich ebenfalls ausgezeichnete Gleiteigenschaften und hohe Abriebfestigkeiten und ließen sich wie in den vorgenannten Beispielen als Konstruktionswerkstoff für Gleitlager- und Schleifkontakt-Anwendungen verarbeiten.

**Patentansprüche**

1. Konstruktionswerkstoffe mit guten Gleiteigenschaften zur Anwendung im Maschinenbau, dadurch gekennzeichnet, daß sie 20-80 Gew.-% Metallsulfid in Form von Eisensulfid, Kobaltsulfid, Nickelsulfid, Kupfersulfid, Molybdänsulfid, Zinnsulfid oder Antimonsulfid, Rest Kohlenstoff, enthalten.

2. Materialien nach Anspruch 1, dadurch gekennzeichnet, daß der Kohlenstoff in Form von Graphit vorliegt.

3. Materialien nach Anspruch 1 und 2, dadurch gekennzeichnet, daß der Kohlenstoff in Form von Naturgraphit vorliegt.

4. Materialien nach Anspruch 1 bis 3, dadurch gekennzeichnet, daß die Metallsulfide überwiegend in Form von $FeS_2$, $CoS$, $Ni_3S_2$, $Cu_2S$, $MoS_2$, $SnS_2$ oder $Sb_2S_3$ vorliegen.

5. Verfahren zur Herstellung von Formkörpern aus Materialien nach Anspruch 1 bis 4, dadurch gekennzeichnet, daß das Kohlenstoff-/Schwefel-/Metallpulver-Gemisch im Temperaturbereich zwischen 80 °C und 200 °C mit einem Druck von 20-100 MN/m² gepreßt und bei Temperaturen bis 700 °C unter anhaltendem Druck in der Presse nachgetempert wird.

**Claims**

1. Construction materials having good sliding properties for use in mechanical engineering, characterised in that they contain from 20 to 80 % by weight of metal sulphide in the form of iron sulphide, cobalt sulphide, nickel sulphide, copper sulphide, molybdenum sulphide, tin sulphide or antimony sulphide, the remainder carbon.

2. Materials according to claim 1, characterised in that the carbon is present in the form of graphite.

3. Materials according to claims 1 and 2, characterised in that the carbon is present in the form of natural graphite.

4. Materials according to claims 1 to 3, characterised in that the metal sulphides are present predominantly in the form of $FeS_2$, $CoS$, $Ni_3S_2$, $Cu_2S$, $MoS_2$, $SnS_2$ or $Sb_2S^3$.

5. A process for the production of shaped articles from materials according to claims 1 to 4, characterised in that the carbon/sulphur/metal powder mixture is pressed at a pressure of from 20 to 100 MN/m² in a temperature range of between 80 °C and 200 °C and is subsequently tempered in the press under a sustained pressure at temperatures of up to 700 °C.

**Revendications**

1. Matériaux de construction possédant de bonnes propriétés de glissement destinés à être utlisés dans la construction de machines, caractérisés en ce qu'ils contiennent de 20 à 80 % en poids de sulfures de métaux sous la forme de sulfure de fer, sulfure de cobalt, sulfure de nickel, sulfure de cuivre, sulfure de molybdène, sulfure d'étain, ou sulfure d'antimoine, le reste étant du carbone.

2. Matériaux suivant la revendication 1, caractérisée en ce que le carbone s'y trouve sous la forme de graphite.

4

**0 108 892**

3. Matériaux suivant les revendications 1 et 2, caractérisés en ce que le carbone s'y trouve sous la forme de graphite naturel.

4. Matériaux suivant les revendications 1 à 3, caractérisés en ce que les sulfures métalliques s'y trouvent principalement sous la forme de $FeS_2$, CoS, $Ni_3S_2$, $Cu_2S$, $MoS_2$, $SnS_2$ ou $Sb_2S_3$.

5. Procédé pour la fabrication de pièces moulées faites des matériaux suivant les revendications 1 à 4, caractérisé en ce que le mélange en poudre carbone/soufre/métal est pressé dans une plage de température se situant entre 80 et 200 °C, sous une pression de 20 à 100 $MN/m^2$, puis est recuit, en maintenant la pression dans la presse, à des températures pouvant atteindre jusqu'à 700 °C.

5